# EUROPEAN PATENT SPECIFICATION

(11) **EP 1 969 389 B1**
(45) Date of publication and mention of the grant of the patent: **12.10.2011**
(21) Application number: 06835678.1
(22) Date of filing: 22.12.2006
(51) Int. Cl.: G01S 7/41

(54) **METHOD FOR EXTRACTING A SEMANTIC PARAMETER, COMPUTER SYSTEM AND COMPUTER PROGRAM PRODUCT**
VERFAHREN ZUM EXTRAHIEREN EINES SEMANTISCHEN PARAMETERS, COMPUTERSYSTEM UND COMPUTERPROGRAMMPRODUKT
PROCEDE D EXTRACTION D UN PARAMETRE SEMANTIQUE, SYSTEME INFORMATIQUE ET PROGRAMME INFORMATIQUE

(30) Priority: 23.12.2005 EP 05077970
(43) Date of publication of application: 17.09.2008
(73) Proprietor: Nederlandse Organisatie voor Toegepast -Natuurwetenschappelijk Onderzoek TNO, 2628 VK Delft (NL)
(72) Inventor: VAN DORP, Philip, NL-2645 KL Delfgauw (NL); GROEN, Franciscus, Corstiaan, Arnold, NL-2287 BD Rijswijk (NL)
(74) Representative: Hatzmann, Martin
(86) International application number: PCT/NL2006/000656
(87) International publication number: WO 2007/073173

(56) References cited:
- VAN DORP P ET AL: "Human walking estimation with radar" IEE PROCEEDINGS: RADAR, SONAR & NAVIGATION, INSTITUTION OF ELECTRICAL ENGINEERS, GB, vol. 150, no. 5, 2 October 2003 (2003-10-02), pages 356-365, XP006024229 ISSN: 1350-2395 cited in the application
- GEISHEIMER J L ET AL: "A high-resolution Doppler model of the human gait" PROCEEDINGS OF THE SPIE - THE INTERNATIONAL SOCIETY FOR OPTICAL ENGINEERING SPIE-INT. SOC. OPT. ENG USA, vol. 4744, 2002, pages 8-18, XP002384570 ISSN: 0277-786X
- GEISHEIMER J L ET AL INSTITUTE OF ELECTRICAL AND ELECTRONICS ENGINEERS: "A continuous-wave (cw) radar for gait analysis" CONFERENCE RECORD OF THE 35TH. ASILOMAR CONFERENCE ON SIGNALS, SYSTEMS, & COMPUTERS. PACIFIC GROOVE, CA, NOV. 4 - 7, 2001, ASILOMAR CONFERENCE ON SIGNALS, SYSTEMS AND COMPUTERS, NEW YORK, NY : IEEE, US, vol. VOL. 1 OF 2. CONF. 35, 4 November 2001 (2001-11-04), pages 834-838, XP010581035 ISBN: 0-7803-7147-X
- OTERO M: "Application of a continuous wave radar for human gait recognition" PROCEEDINGS OF THE SPIE - THE INTERNATIONAL SOCIETY FOR OPTICAL ENGINEERING SPIE-INT. SOC. OPT. ENG USA, vol. 5809, no. 1, May 2005 (2005-05), pages 538-548, XP002384571 ISSN: 0277-786X
- GRENEKER G III: "Very low cost stand-off suicide bomber detection system using human gait analysis to screen potential bomb carrying individuals" PROCEEDINGS OF THE SPIE - THE INTERNATIONAL SOCIETY FOR OPTICAL ENGINEERING SPIE-INT. SOC. OPT. ENG USA, vol. 5788, no. 1, May 2005 (2005-05), pages 46-56, XP002384572 ISSN: 0277-786X

## Description

The invention relates to a method for extracting a semantic parameter of an object from a radar signal, comprising a step of retrieving time dependent velocity data of the object from the radar signal.

Radar signals serve as a useful sensing technique for observing objects, such as persons, animals and/or vehicles. By analyzing radar signals such objects can also be observed in situations where they are not or less visible for the human eye, e.g. behind walls or at great distances.

From the scientific paper Human walking estimation with radar, by P. van Dorp en F.C.A. Groen, IEE Proc. - Radar Sonar Navigation, Volume 150 (No. 5), pages 356-366, October 2003, a method is known to estimate a semantic parameter, such as an average torso velocity or a moving leg frequency of a walking person that is represented by the object in the radar signal. Thereto time dependent velocity data of the object from the radar signal is retrieved and analysed e.g. for extraction of an average velocity of a walking person.

Further, the paper entitled "Application of a continuous valve radar for human gait recognition" by M. Otero, Proc. Of the SPIE, Vol. 5809, No. 1, May 2005, pages 538-548, discloses a method for processing velocity data in a radar signal for the retrieval of a human gait. A Fourier transform is applied for determining cadence frequencies.

It is an object of the invention to improve such a method for extracting a semantic parameter of an object from a radar signal. Thereto, the method according to the invention further comprises the step of determining an envelope of the time dependent velocity data of the object and the step of processing the envelope for obtaining a numerical estimation of a semantic parameter of the object.

By determining an envelope of the time dependent velocity data of the object, interesting information of the object can be deduced in an elegant and relatively easy way, such as a minimum and maximum velocity of the object or one or more parts of the object. Further, by processing the envelope for obtaining a semantic parameter of the object a numerical estimation of the semantic parameter can be obtained.

It is noted that determining an envelope of the time dependent velocity data of the object can e.g. be performed directly in time domain. However, an envelope can also be obtained by performing a Fourier transformation with respect to the time parameter and by processing the spectral data. A further alternative comprises performing a numerical analysis on the velocity data using the so-called principle component analysis.

In an advantageous embodiment the step of determining an envelope of the time dependent velocity data of the object comprises a step of segmentation of the velocity data of the object, so that velocity data having an amplitude that is greater than a noise level, can be clustered and separated from useless information in the velocity data. Also other methods for separating useful information from useless information in the velocity data can be applied, such as general or specific noise removal filtering.

Preferably, the step of processing the envelope for obtaining a semantic parameter of the object comprises determining a lower and/or an upper velocity bound in the velocity dependent velocity data. Thereby, semantic parameters such as a lower and/or upper velocity of the object or part of the object can be obtained. However, also other types of processing the envelope for obtaining a semantic parameter of the object can be applied, alone or in combination, such as determining a repetition frequency and/or a phase of the envelope.

The method according to the invention can e.g. be applied to an object representing a human body. In doing so, an extracted lower and/or upper velocity of the objects can be interpreted as time dependent velocities of legs and/or arms of the human body. Further, a repetition frequency and a phase of the envelope can be interpreted as a walking (or swinging) frequency and phase of a limb movement, respectively. The latter might lead to information of an actual position of the limb. Such information can be processed to determine if the human body in question is walking, biking, riding, skating, swimming, creeping, falling, standing up, etc.

It is noted however, that the object might not only represent human bodies, but also other types of objects, such as animals or vehicles.

By using the one or more extracted semantic parameters as input parameters of a human body model, the radar signal can advantageously be visualized in such a way that a human observer can easily interpret the data.

Further, the invention relates to a computer system to perform the method of claim 1.

Additionally, the invention relates to a computer program product for extracting a semantic parameter of an object from a radar signal, which computer program product comprises instructions for causing a processor to perform the steps of retrieving time dependent velocity data of the object from the radar signal; determining an envelope of the time dependent velocity data of the object and processing the envelope for obtaining a semantic parameter of the object.

Other advantageous embodiments according to the invention are described in the following claims.

By way of example only, embodiments of the present invention will now be described with reference to the accompanying figures in which
Fig. 1 shows a velocity-time data of a radar signal;
Fig. 2 shows an envelope of the velocity data of Fig. 1;
Fig. 3 shows a graph of velocity data at a fixed time instant;
Fig. 4 shows an amplitude distribution of velocity data at a fixed time instant;
Fig. 5 shows hat functions with varying width; and
Fig. 6 shows a human body model.

The figures are merely schematic views of preferred embodiments according to the invention. In the figures, the same reference numbers refer to equal or corresponding parts.

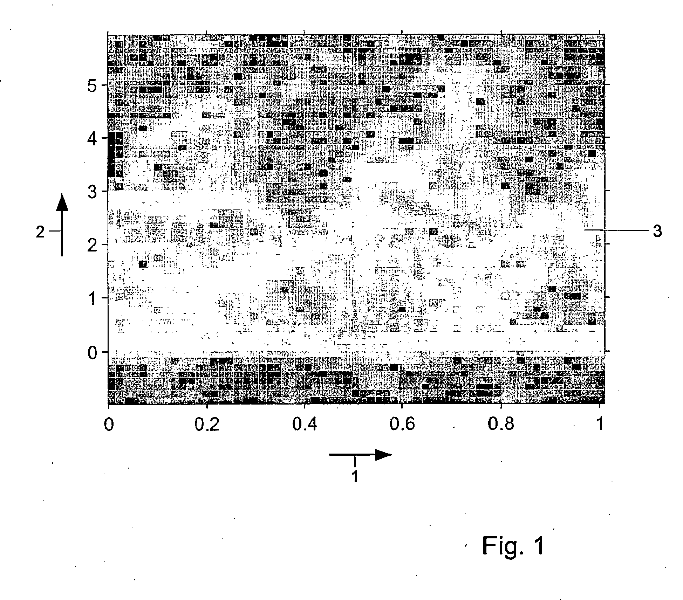

Figure 1 shows velocity-time data of a radar signal. The radar signal is generated by a radar scanning a region. The radar is e.g. of the frequency modulated continuous wave (FMCW) type and generates information with respect to object range information and object velocity components. From the radar signal, time dependent velocity data of the object is retrieved.

Advantageously, the step of retrieving the time dependent velocity data of the object comprises selecting an object from the range information data, so that data with respect to a particular object can be analyzed.

Preferably, the step of retrieving the time dependent velocity data of the object comprises filtering range information of the object from the radar signal, thereby reducing the amount of radar signal data to be analyzed. In Figure 1, time dependent velocity data, also called the spectrum of the object from the radar signal, is shown. The horizontal axis 1 denotes the time parameter, while the vertical axis 2 denotes the velocity. The amplitude 3, or power, of the radar signal is depicted in a grey scale.

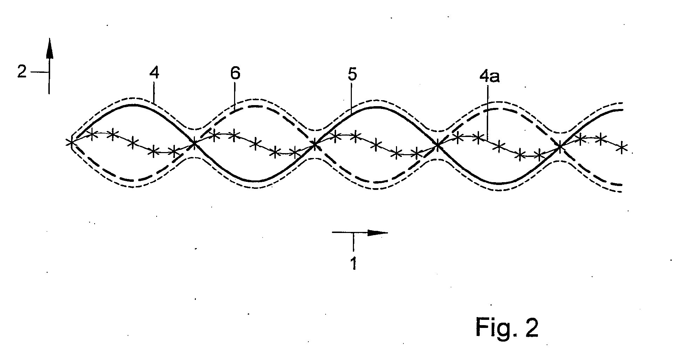

The method according to the invention further comprises determining an envelope of the time dependent velocity data of the object. Such an envelope is in simplified form shown in Figure 2 as a dotted line 4. Further, the envelope is processed for obtaining a semantic parameter of the object.

The data shown in Figures 1 and 2 are based upon a radar signal from an object that represents a human body, in particular a walking person. As parts of the human body, such as the torso, limbs, etc., in general have different instant velocities, also different velocity components are caused in the radar signal. As a consequence, the time dependent velocity data of the walking person contains information with respect to an average velocity of the torso of the body, as well information with respect to limbs, such as legs and/or arms. The time dependent velocities of the legs are depicted in Figure 2 as a solid line 5 and as a discontinuous line 6, representing a left and right leg, respectively.

Further, a time-dependent average velocity 4a is calculated from the velocity data of the object. The average velocity is interpreted as the average speed of the torso. As can be seen from Figure 2, the average velocity, denoted by a line with multiple asterixes, comprises a frequency component at a frequency that is approximately twice the frequency of the limbs. This double frequency represents a waddling frequency of the hips.

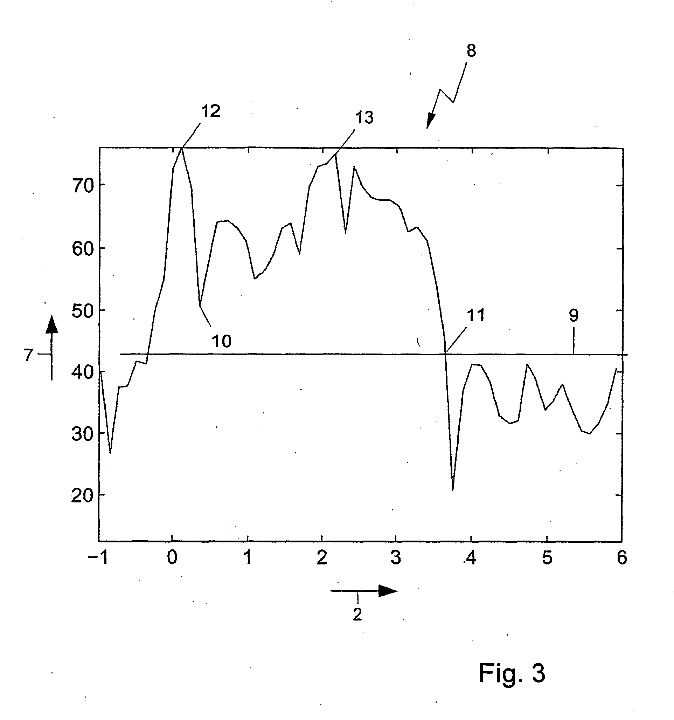

In the following, one embodiment of the step of determining the envelope of the time dependent velocity data of the objects is explained in more detail. Figure 3 shows a graph 8 of velocity data at a fixed instant, also called a time slice from the velocity spectrum from Figure 1. Again, the horizontal axis denotes the velocity 2, while the vertical axis denotes the amplitude 7, or power, of the velocity data. The method comprises a segmentation step of the velocity data of the object to cluster useful information of the velocity data. All components lower than a predetermined value, the threshold 9, are ignored. Further, artificial components, such as zero speed clutter 12 can be removed. The components higher than the threshold 9 are considered as useful information with respect to velocity information of the object. In this way a lower velocity bound 10 and an upper velocity bound 11 of the velocity data are determined. By collecting the lower and upper velocity bounds per time instant, the envelope is obtained. It is noted that the envelope could be further processed, e.g. by smoothing the time dependent envelope. A centre velocity is estimated by determining the velocity with the highest amplitude 13. By collecting the centre velocities per time instant, an average velocity is estimated.

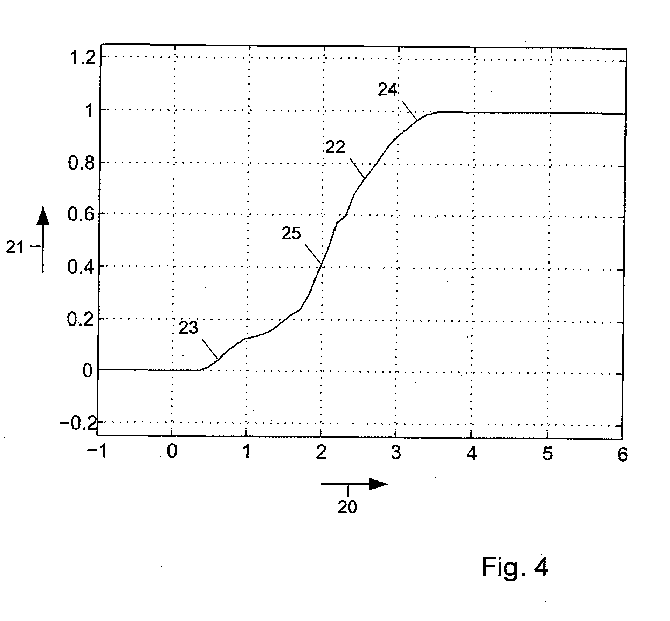

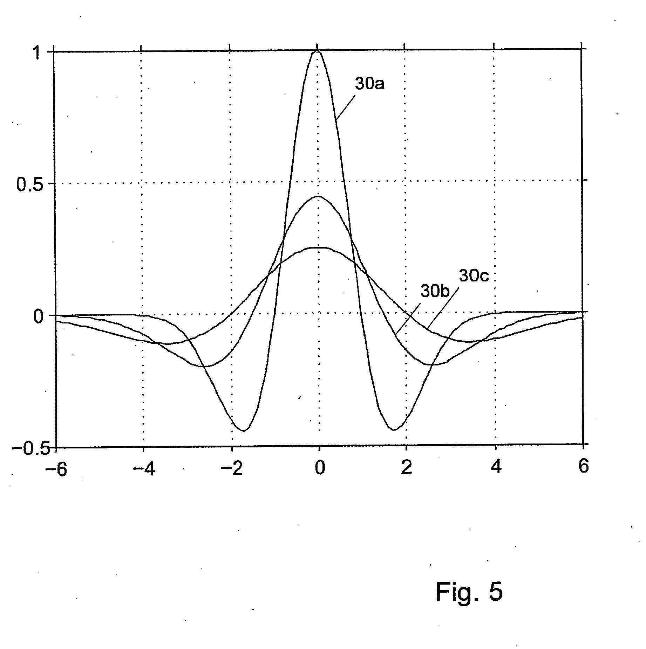

In Figures 4 and 5 other methods according to the invention for determining a lower velocity bound, an upper velocity bound and/or an average velocity at a particular time instant are illustrated.

According to a second method an amplitude distribution 22 of the velocity data is calculated as shown in Figure 4, wherein the horizontal axis denotes the velocity 20, while the vertical axis denotes a cumulative sum 21 of the data. A lower and an upper velocity bound 23 and 24 are determined by choosing a lower and upper percentage, respectively, of the whole data set. Further, an average velocity 25 is determined at a percentage of 50%. This method is also known as the percentiles method.

According to a third method the amplitude 7 of the velocity data is mapped to a hat function with variable width. Figure 5 shows several hat functions 30a, 30b, 30c with variable width. From the hat function which in some sense maps optimal with the velocity data, see e.g. Recognizing transient low-frequency whale sounds by spectrogram correlation by D.K. Mellinger and C.H. Clark, Acoustical Society of America, Volume 107 (No. 6), pages 3518-3529, June 2000, a lower and an upper velocity bound is obtained by determining e.g. a double width distance or another distance from the centre of the hat function. Again the centre is selected as an average velocity.

The envelope is processed for obtaining semantic parameters, such as a repetition frequency representing a leg frequency, and a phase of the envelope for deduction of a leg position.

Further processing of the envelope of the time dependent velocity data of the object might lead to further semantic parameters, such as a torso frequency, a torso phase, a torso offset, as well as a leg deviation and/or a leg offset.

By assuming that the legs and the torso behave as a sinusoidal function, estimation of the frequency and phase can be improved. However, also an estimation of the leg and torso parameters can be computed without using a priori information.

In order to obtain a more accurate result, the radar signal is preprocessed, e.g. for suppressing of artificial information and noise. This might be accomplished by using e.g. a Kalman filter. Also other filters might be used, such as a Wiener filter. Also other pre-processing steps can be performed, e.g. processing steps enhancing edges of objects.

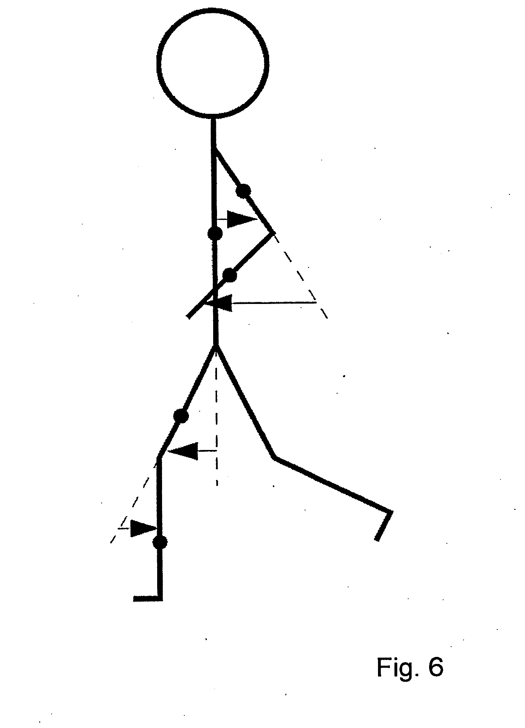

The extracted semantic parameters are employed as input parameters of a human body model. Thereby object information from the radar signal is visualized. An example of a human body model is shown in Figure 6. The position of the torso, legs and arms is determined by several input parameters. In the Boulic model some global parameters completely describe the human motion, see e.g. A global human walking model with real time kinematic personifaction, by R. Boulic, M.N. Thalmann and D. Thalmann, Visual Computing, Volume 6: pages 344-356, 1990. Optionally, some parameters such as the torso frequency and torso phase, as well as a leg frequency and a leg phase are input to the human body model for animation of a human walking model. Alternatively, only the model features being extracted from the radar data are input in a body model to obtain a personified human model, e.g. a Nancy model, see e.g. VRML Humanoid Animation Working Group, http://www.h-anim.org, 1997, wherein other model features, e.g. the position of the arms, remain static.

The invention is not restricted to the embodiments described herein. It will be understood that many variants are possible.

Instead of filtering velocity information from the radar signal, it is also possible to combine velocity data with range data and/or acceleration data to optimally employ the radar data.

As the person skilled in the art knows, different radar types can be employed and/or combined for retrieving data from objects. Such data types comprise e.g. scanning radars and/or multiple beam radars generating azimuth and/or elevation data. Further, multiple radars at different positions can be employed to obtain different data sets to be combined.

In addition, it is noted that instead of analysing time dependent velocity data of a moving object, such as a walking person, the method according to the invention might also be applied for extracting a semantic parameter of a non-moving object, such as a standing person having swinging arms. If only moving objects are of interest, information with respect to objects having a constant position can be filtered from the signal data.

Other such variants will be obvious for the person skilled in the art and are considered to lie within the scope of the invention as formulated in the following claims.

## Claims

1. A method for extracting a semantic parameter of an object from a radar signal, comprising the step of:
- retrieving time dependent velocity data of the object from the radar signal (3), **characterized in that** the method further comprises the steps of:
- determining an envelope (4) of the time dependent velocity data of the object; and
- processing the envelope for obtaining a numerical estimation of a semantic parameter of the object.

2. A method according to claim 1, wherein the step of retrieving the time dependent velocity data of the object comprises selecting an object from range information data from the radar signal.

3. A method according to claim 1 and/or 2, wherein the step of retrieving the time dependent velocity data of the object comprises filtering range information of the object from the radar signal.

4. A method according to any of the previous claims, further comprising calculating an average velocity from the velocity data of the object.

5. A method according to any of the previous claims, wherein the step of determining an envelope of the time dependent velocity data of the object comprises a step of segmentation of the velocity data of the object.

6. A method according to any of the previous claims, wherein the step of processing the envelope for obtaining a semantic parameter of the object comprises determining a lower and/or an upper velocity bound in the time dependent velocity data.

7. A method according to any of the previous claims, wherein the step of processing the envelope for obtaining a semantic parameter of the object comprises determining a repetition frequency.

8. A method according to any of the previous claims, wherein the step of processing the envelope for obtaining a semantic parameter of the object comprises determining a phase of the envelope.

9. A method according to any of the previous claims, wherein the moving object represents a human body.

10. A method According to any of the previous claims, wherein a semantic parameter of the object is input in a human body model.

11. Computer system arranged to perform the method of claim 1.

12. Computer program product for extracting a semantic parameter of an object from a radar signal, which computer program product comprises instructions for causing a processor to perform the step of:
- retrieving time dependent velocity data (4) of the object from the radar signal (3), **characterized in that** the computer program product further comprises instructions for causing a processor to perform the steps of:
- determining an envelope of the time dependent velocity data of the object; and
- processing the envelope for obtaining a numerical estimation of a semantic parameter of the object.

## Patentansprüche

1. Verfahren zum Extrahieren eines semantischen Parameters eines Objektes aus einem Radarsignal, wobei das Verfahren den folgenden Schritt aufweist:
- Gewinnen von zeitabhängigen Geschwindigkeitsdaten des Objektes aus dem Radarsignal (3),
**dadurch gekennzeichnet, dass** das Verfahren ferner die folgenden Schritte aufweist:
- Bestimmen einer Einhüllenden (4) der zeitabhängigen Geschwindigkeitsdaten des Objektes und
- Verarbeiten der Einhüllenden, um eine numerische Abschätzung eines semantischen Parameters des Objektes zu erhalten.

2. Verfahren nach Anspruch 1, bei dem der Schritt des Gewinnens der zeitabhängigen Geschwindigkeitsdaten des Objektes aufweist, ein Objekt anhand von Entfernungsinformationsdaten aus dem Radarsignal auszuwählen.

3. Verfahren nach Anspruch 1 und/oder 2, bei dem der Schritt des Gewinnens der zeitabhängigen Geschwindigkeitsdaten des Objektes aufweist, Entfernungsinformation des Objektes aus dem Radarsignal zu filtern.

4. Verfahren nach einem der vorhergehenden Ansprüche, das ferner aufweist, eine Durchschnittsgeschwindigkeit aus den Geschwindigkeitsdaten des Objektes zu berechnen.

5. Verfahren nach einem der vorhergehenden Ansprüche, bei dem der Schritt des Bestimmens einer Einhüllenden der zeitabhängigen Geschwindigkeitsdaten des Objektes einen Schritt einer Segmentierung der Geschwindigkeitsdaten des Objektes aufweist.

6. Verfahren nach einem der vorhergehenden Ansprüche, bei dem der Schritt des Verarbeitens der Einhüllenden, um einen semantischen Parameter des Objektes zu erhalten, aufweist, eine untere und/oder obere Geschwindigkeitsgrenze in den zeitabhängigen Geschwindigkeitsdaten zu bestimmen.

7. Verfahren nach einem der vorhergehenden Ansprüche, bei dem der Schritt des Verarbeitens der Einhüllenden, um einen semantischen Parameter des Objektes zu erhalten, aufweist, eine Wiederholungsfrequenz zu bestimmen.

8. Verfahren nach einem der vorhergehenden Ansprüche, bei dem der Schritt des Verarbeitens der Einhüllenden, um einen semantischen Parameter des Objektes zu erhalten, aufweist, eine Phase der Einhüllenden zu bestimmen.

9. Verfahren nach einem der vorhergehenden Ansprüche, bei dem das bewegte Objekt einen menschlichen Körper darstellt.

10. Verfahren nach einem der vorhergehenden Ansprüche, bei dem ein semantischer Parameter des Objektes in ein Modell eines menschlichen Körpers eingegeben wird.

11. Computersystem, das ausgestaltet ist, um das Verfahren nach Anspruch 1 durchzuführen.

12. Computerprogrammprodukt zum Extrahieren eines semantischen Parameters eines Objektes aus einem Radarsignal, wobei das Computerprogrammprodukt Anweisungen aufweist, um einen Prozessor dazu zu veranlassen, den folgenden Schritt durchzuführen:
- Gewinnen von zeitabhängigen Geschwindigkeitsdaten des Objektes aus dem Radarsignal (3),
**dadurch gekennzeichnet, dass** das Computerprogrammprodukt ferner Anweisungen aufweist, um einen Prozessor dazu zu veranlassen, die folgenden Schritte durchzuführen:
- Bestimmen einer Einhüllenden (4) der zeitabhängigen Geschwindigkeitsdaten des Objektes und
- Verarbeiten der Einhüllenden, um eine numerische Abschätzung eines semantischen Parameters des Objektes zu erhalten.

## Revendications

1. Procédé d'extraction d'un paramètre sémantique d'un objet à partir d'un signal radar, comprenant l'étape consistant à :
- récupérer des données de vitesse en fonction du temps de l'objet à partir du signal radar (3),
**caractérisé en ce que** le procédé comprend en plus les étapes consistant à:
- déterminer une enveloppe (4) des données de vitesse en fonction du temps de l'objet ; et
- traiter l'enveloppe afin d'obtenir une estimation numérique d'un paramètre sémantique de l'objet.

2. Procédé selon la revendication 1, dans lequel l'étape de récupération des données de vitesse en fonction du temps de l'objet comprend la sélection d'un objet à partir de données d'informations de distance issues du signal radar.

3. Procédé selon la revendication 1 et/ou la revendication 2, dans lequel l'étape de récupération des données de vitesse en fonction du temps de l'objet comprend le filtrage d'informations de distance de l'objet à partir du signal radar.

4. Procédé selon l'une quelconque des revendications précédentes, comprenant en plus le calcul d'une vitesse moyenne à partir des données de vitesse de l'objet.

5. Procédé selon l'une quelconque des revendications précédentes, dans lequel l'étape de détermination d'une enveloppe des données de vitesse en fonction du temps de l'objet comprend une étape de segmentation des données de vitesse de l'objet.

6. Procédé selon l'une quelconque des revendications précédentes, dans lequel l'étape de traitement de l'enveloppe afin d'obtenir un paramètre sémantique de l'objet comprend la détermination d'une limite de vitesse inférieure et/ou supérieure dans les données de vitesse en fonction du temps.

7. Procédé selon l'une quelconque des revendications précédentes, dans lequel l'étape de traitement de l'enveloppe afin d'obtenir un paramètre sémantique de l'objet comprend la détermination d'une fréquence de répétition.

8. Procédé selon l'une quelconque des revendications précédentes, dans lequel l'étape de traitement de l'enveloppe afin d'obtenir un paramètre sémantique de l'objet comprend la détermination d'une phase de l'enveloppe.

9. Procédé selon l'une quelconque des revendications précédentes, dans lequel l'objet mobile représente un corps humain.

10. Procédé selon l'une quelconque des revendications précédentes, dans lequel un paramètre sémantique de l'objet est introduit dans un modèle du corps humain.

11. Système informatique adapté pour exécuter le procédé de la revendication 1.

12. Produit logiciel informatique permettant d'extraire un paramètre sémantique d'un objet à partir d'un signal radar, ledit produit logiciel informatique comprenant des instructions pour faire exécuter par un processeur l'étape consistant à :
- récupérer des données de vitesse en fonction du temps (4) de l'objet à partir du signal radar (3),
**caractérisé en ce que** le produit logiciel informatique comprend en plus des instructions pour faire exécuter par un processeur les étapes consistant à :
- déterminer une enveloppe des données de vitesse en fonction du temps de l'objet ; et
- traiter l'enveloppe afin d'obtenir une estimation numérique d'un paramètre sémantique de l'objet.
